# EUROPEAN PATENT SPECIFICATION

(11) **EP 2 731 919 B1**
(45) Date of publication and mention of the grant of the patent: **30.08.2017**
(21) Application number: 12745727.3
(22) Date of filing: 12.07.2012
(51) Int. Cl.: C03C 11/00, C03C 3/093, C03C 17/25

(54) **CHEMICALLY DURABLE POROUS GLASS WITH ENHANCED ALKALINE RESISTANCE**
CHEMISCH BESTÄNDIGES PORÖSES GLAS MIT VERBESSERTER ALKALIBESTÄNDIGKEIT
VERRE POREUX CHIMIQUEMENT DURABLE À RÉSISTANCE AMÉLIORÉE AUX SUBSTANCES ALCALINES

(30) Priority: 12.07.2011 US 201113181302
(43) Date of publication of application: 21.05.2014
(73) Proprietor: Schott Corporation, Elmsford, NY 10523 (US)
(72) Inventor: JAMES III, William H., Clarks Summitt, Pennsylvania 18411 (US); PUCILOWSKI, Sally, Duryea, Pennsylvania 18642 (US); URRUTI, Eric H., Duryea, Pennsylvania 18642 (US); BOCKMEYER, Matthias, 55116 Mainz (DE)
(74) Representative: Fuchs Patentanwälte Partnerschaft mbB
(86) International application number: PCT/US2012/046530
(87) International publication number: WO 2013/010019

(56) References cited:
- US-A- 3 783 101
- US-A- 4 661 138
- US-A- 4 665 039
- MORIYA Y ET AL: "CONTROL OF PORE CHARACTERISTICS OF POROUS GLASS BY COATING APPLYINGSOL-GEL METHOD", JOURNAL OF THE CERAMIC SOCIETY OF JAPAN, INTERNATIONAL EDITION, FUJI TECHNOLOGY PRESS, TOKYO, JP, vol. 103, no. 7, 1 July 1995 (1995-07-01), pages 725-727, XP000547584, ISSN: 0912-9200

## Description

The invention relates to alkaline resistant porous glasses and methods for the preparation and use thereof. More specifically, the invention relates to the application of a sol gel coating to the glass to enhance its chemical durability in alkaline solutions.

The glasses of the present invention are particularly applicable as substrates for separation technology where harsh alkaline environments (pH ≥ 8 e.g., pH 12-14) are routinely prevalent. For example, the alkaline resistant glasses of the present invention are useful in FDA required regeneration protocols, which include aggressive caustic leaching (pH >12) to remove residual bioburden.

Applications where alkaline resistant porous glass plays a significant role include, but are not limited to, separation of biological molecules, separation/sequestering of gases, and filtration of liquids. Furthermore, chemically durable porous glass, particularly alkaline resistant porous glass, has commercial value as a bio-separation substrate for the separation, purification, and manufacturing of monoclonal antibodies. In this field, FDA mandated cleaning-in-place protocols for the removal of bioburden during chromatography column regeneration have caused an industry wide bottleneck with respect to implementing porous glass as a solution. The present invention addresses this problem, providing an alkaline resistant porous glass with significantly improved properties.

US 3,549,524 and US 3,758,284 disclose a material and method for producing controlled pore glass for use in steric separations.

US 4,665,039 discloses porous glass compositions and a process for producing porous glass. US 4,665,039 aim was to minimize breakage and cracking during production, produce porous glass over a range of pore sizes (5-4000 nanometers), and improve alkaline resistance and high flexural strength.

US 4,778,777 discloses chemically durable porous glass, and teaches incorporation of ZrO₂, ZnO, and Al₂O₃ to improve the chemically durability of the porous glass.

US 4,657,875 discloses porous glass with increased Al₂O₃ content to improve chemical durability.

US 3,783,101 and US 4,025,667 disclose porous glass with a ZrO₂ coating derived from either ZrOCl₂ or a zirconium chelate. The coating was applied to controlled pore glass powder for the immobilization of enzymes.

US 4,661,138 discloses a method of strengthening the alkaline resistance of SiO₂-B₂O₃-Na₂O porous glass via application of a thin film of ZrO₂. Moriya et al., "Control of Pore Characteristics of Porous Glass by Coating Applying Sol-Gel Method", Journal of the Ceramic Society of Japan, 103 (7), 1995, pp. 725-727, discloses Vycor type porous glasses coated with ZrO₂ based sol-gel coasting. US 4,780,369 and US 4,042,359 discloses a porous glass membrane tube and process for production of porous glass membrane tubes from phase separated alkali borosilicate for application in extraction/filtration processes.

Other relevant publications teaching various application of alkaline porous glasses include, Haller, "Application of Controlled Pore Glass in Solid Phase Biochemistry," Chapter 11, p. 535-597 in 'Solid Phase Biochemistry' 1983 and Schnabel et al., "Separation of protein mixtures by bioran porous glass membranes" Journal of Membrane Science v. 36, p. 55-66, 1988.

In one aspect, the present invention relates to a porous, alkaline resistant, sodium borosilicate glass comprising on an oxide basis
SiO₂, B₂O₃ and Na₂O forming a glass composition,
ZrO₂, TiO₂, Al₂O₃, CaO and/or ZnO as an additive to the glass composition, and a ZrO₂ based sol gel coating on the glass,
which glass has undergone phase separation to form a boron-rich soluble phase and a silica-rich insoluble phase, and the boron-rich soluble phase has been substantially removed prior to the application of the sol gel coating,
wherein the ZrO₂ based sol gel coating is applied by immersion of the glass into a 0.5 to 6.0 % cerium oxide stabilized zirconia sol. Typical sodium borosilicate glasses contain in the starting glass composition, on an oxide basis by weight, e.g., 40-80 % SiO₂, 5-35 % B₂O₃ and 1-10 % Na₂O, preferably 45-65 % SiO₂, 20-30 % B₂O₃ and 2-8 % Na₂O, and more preferably 50-55 % SiO₂, 25-27 % B₂O₃ and 5-7 % Na₂O. Other ingredients include ZrO₂, TiO₂, Al₂O₃, CaO and/or ZnO, and optionally further ingredients are permissible, e.g., Mg, Fe, Mn, Ce, Sn, etc., and other impurities, preferably in amounts that do not adversely affect the alkaline resistance of the glasses nor the ability of the glass to phase separate.

The current invention relates to a process of making glasses by applying a ZrO₂ based sol gel coating to a porous, alkaline resistant, sodium borosilicate glass containing as additives ZrO₂, TiO₂, Al₂O₃, CaO and/or ZnO, which enhance the alkaline resistance of the glass, and to glasses obtained by such a process.

Applicants have found that when both additives are added to a porous borosilicate glass composition and a coating is applied onto the glass, each to enhance the alkaline resistance of the porous borosilicate glass, a synergistic effect occurs whereby the improvement in alkaline resistance is unexpectedly and significantly enhanced. Such an improved glass provides significant advantages in an art where, for example, when used as a substrate in separation technology under pH 12-14 conditions, the life of the glass is significantly elongated. Such results in significant cost reductions and less interruptions in processing, e.g., the substrate is not required to be changed and/or replenished as often.

In one embodiment, the additives to improve the alkaline resistance of glass compositions, i.e. ZrO₂, TiO₂, Al₂O₅, CaO and/or ZnO, are incorporated in a sodium borosilicate glass batch. The batch is melted and processed into a porous glass powder. Thereafter, a ZrO₂ based sol gel coating is applied to the porous glass powder to enhance the alkaline resistance of the material. In some embodiments, the coating is applied in multiple steps, for example, two or three steps, preferably, two steps. The sol is stabilized by 0.5 to 6.0 % cerium oxide.

This dopant stabilizes the preferred crystal phase and/or increases the alkaline chemical resistance of the coating.

In a preferred embodiment, the glass is in a powder form. A monolithic piece of glass is also within the scope of the invention having the herein described characteristics. Noted is however that the ability to form physically acceptable monolithic pieces depends greatly on the composition as many sodium borosilicate glasses deteriorate (i.e., crumble) during the leaching process to powder. To provide stability to a sodium borosilicate glass matrix, additives, i.e. ZrO₂, TiO₂, Al₂O₃, CaO and/or ZnO are added, thus leading to the survival of leached monolithic pieces. Many, although not all, phase separable sodium borosilicate glass compositions that do not contain additives crumble during leaching.

Representative glass compositions having improved alkaline resistance are shown in Table I. Additives, i.e. ZrO₂, TiO₂, Al₂O₃, CaO and/or ZnO contribute to increased chemical durability in alkaline solutions. The glass is prepared by mixing the materials listed to achieve a given composition to produce a batch. The batch is placed in a crucible, for example, in a platinum crucible, and heated to a temperature in excess of 1400 °C to melt the raw materials.

The glass is annealed and heat treated to induce phase separation. The phase separation creates a boron-rich soluble phase and a silica-rich insoluble phase. The phase separated glass is pulverized into a powder of desired particle size. The glass powder is leached in acid, for example, 8%-12% hydrochloric acid at 60 °C-100 °C to create a porous glass. After the pore forming acid leach, the open pores contain colloidal silica, a decomposition product formed during the acid leach. In order to remove the colloidal silica, the porous glass product is cleaned in a basic solution, e.g., sodium hydroxide bath. The duration of the pore cleaning wash and concentration of the caustic solution used are determined by the glass composition and particle size, so as not to leach away the silica-rich phase. The porous glass powder is optionally dried, for example, overnight at 75 °C-100 °C.

As known and discussed above, sodium hydroxide has the ability to leach away the silica rich phase also as a function of duration and concentration.

To test the alkaline resistance of the product, it is exposed to a concentrated sodium hydroxide bath for a predetermined time. At the end of the test, the remaining weight of the porous glass powder, i.e., the material that did not leach away, can be measured as an indication of how resistant the glass product is to alkalinity. The result can be reported as either the amount remaining or the amount that leached away, i.e., as weight loss.

Similar types of tests are known in the art, for example, for testing the alkaline stability of ligands. See, e.g., US 2010/0221844 teaching to expose ligands to 0.5M NaOH for 5, 10, 15, 20, 25 or 30 hours to test their alkaline resistance. See also the publications from GE Healthcare titled "Lifetime performance study of MabSelect SuRe™ LX during repeated cleaning-in-place," and "MabSelect SuRe Alkali-stabilized protein A-derived medium for capture of monoclonal antibodies," both teaching the testing of alkali resistance of ligands with 0.1 M or 0.5 M NaOH.

The alkaline resistance is enhanced by the application of a sol gel coating. According to the invention, the alkaline resistant porous glass powder is immersed in a cerium oxide stabilized zirconia sol and agitated for a sufficient time to ensure that the entire surface area has been coated, i.e., 1 to 2 hours typically. The porous glass powder is dried overnight at 90-110 °C. The dried powder is fired at temperatures ranging from 500-800 °C to produce a dense, non-porous coating. In some embodiments the porous glass powder is immersed in cerium oxide stabilized zirconia sol, dried, and fired more than once, for example, twice. In certain embodiments, the glass is fired longer in the first immerse, dry, and fire cycle than in the subsequent cycles.

The content of CeO₂ in the ZrO₂ coating is between 0.5 - 6.0 mol %.

The sol-gel-coating contains a nanocrystalline ceramic material. The sol-gel-coating in general contains a granular nanocrystalline microstructure. The porosity of the coating is, in a preferred embodiment, between 1 - 25 volume %, more preferably between 2 - 15 volume %. The porosity is due to mesopores with a pore diameter of 2 - 10 nm, preferably 2 - 5 nm, and/or micropores with a pore diameter below 2 nm. In a special embodiment the pores are all or partly closed pores, which are not measurable by sorption methods, such as N₂-sorption. ZrO₂ preferably shows pores with diameter below 5 nm, more preferably below 3 nm.

The film thickness of the sol-gel-coatings is, in an embodiment, between 4 - 500 nm, preferably between 10 - 250 nm, more preferably between 15 - 150 nm. The surface roughness of the coatings is, in a special embodiment, preferably below 20 nm, more preferably below 5 nm. The surface roughness can be measured by atomic force microscope.

The crystallite size for the ZrO₂ coating is between 4 - 50 nm, preferably between 7-40 nm, more preferably between 10 - 30nm. The crystal phase of the ZrO₂ is, in one preferred embodiment, tetragonal and/or cubic and/or monoclinic. Whereas in one special embodiment the tetragonal phase ZrO₂ is the more preferred phase.

It is important that the boron-rich phase of the glass is substantially removed, so that a suitable porous glass would form.

In one embodiment, the percent of ZrO₂ in the glass composition by weight is 1 to 12%, preferably 4 to 10 %, more preferably 5 to 9 %.

In another embodiment, the percent of TiO₂ in the glass composition by weight is 1 to 10%, preferably 1 to 7 %, more preferably 2 to 5 %.

In a further embodiment, the percent of Al₂O₃ in the glass composition by weight is 1 to 10%, preferably 2 to 5 %, more preferably 3 to 4 %.

In yet another embodiment, the percent of CaO in the glass composition by weight is 1 to 10%, preferably 3 to 8 %, more preferably 4 to 6 %.

In a further embodiment, the percent of ZnO in the glass composition by weight is 1 to 10%, preferably 3 to 8 %, more preferably 4 to 6 %.

The concentration of the sol is 0.5% to 6 % ZrO₂, more preferably 0.5% to 1% ZrO₂.

In some embodiments, two ZrO₂ based sol gel coatings are applied.

In a further embodiment, the sol-gel-coating after having been applied to the glass is fired at temperatures ranging from 600-800 °C, preferably 650-750 °C.

In another embodiment, the glass particles are pulverized to a size between 0.1-500 microns, preferably 75-300 microns, more preferably 100-200 microns, and even more preferably 125-175 microns.

In some embodiments, hydrochloric acid is used to substantially remove the boron-rich phase.

In a preferred embodiment, preparing a porous, alkaline resistant, sodium borosilicate glass includes:
A. melting ingredients for a sodium borosilicate glass to a molten state,
B. cooling and annealing in a manner that minimizes or prevents phase separation,
C. phase separating the class into a boron-rich soluble phase and a silica-rich insoluble phase,
D. pulverizing the glass into particles of 100-200 microns, preferably 125-175 microns, in size,
E. creating pores in the glass particles by leaching the boron-rich phase from the glass in hydrochloric acid with minimal or no leaching of the silica-rich phase,
F. cleaning the glass partials in a sodium hydroxide bath with minimal or no leaching of the silica-rich phase,
G. immersing glass particles in an cerium oxide stabilized zirconia sol,
H. agitating the glass particles in the sol,
I. removing the glass particles from the sol,
J. drying the glass particles, and
K. firing the glass particles at a temperature of 600 to700 °C.

### Examples:

All amounts in the examples and throughout the application are based on weight.

**Table I.**

| | **1** | **2** | **3** | **4** | **5** | **6** | **7** | **8** |
|---|---|---|---|---|---|---|---|---|
| **SiO2** | 54.16 | 52.40 | 52.77 | 50.93 | 53.28 | 50.61 | 52.70 | 52.12 |
| **B2O3** | 26.12 | 25.99 | 26.87 | 25.73 | 26.43 | 26.23 | 26.17 | 25.66 |
| **Al₂O₃** | 3.44 | 3.42 | 3.41 | 3.39 | - | - | - | - |
| **Na2O** | 5.95 | 5.92 | 5.89 | 5.86 | 6.02 | 5.97 | 5.95 | 5.89 |
| **CaO** | 5.17 | 5.14 | 5.12 | 5.09 | - | - | - | - |
| **ZnO** | - | - | - | - | 5.23 | 5.20 | 5.18 | 5.12 |
| **ZrO2** | 5.16 | 5.14 | 6.94 | 7.00 | 7.03 | 6.98 | 8.02 | 8.99 |
| **TiO2** | - | 2.00 | - | 2.00 | 2.00 | 5.00 | 2.00 | 2.01 |
| | | | | | | | | |
| **Mean Pore Diameter (nm)** | | 43 | | | | | | |
| **Alkaline Resistance Weight Loss (%)** | | 23 | | | | | | |

### Prior art Example 1

Batch of composition 2 from Table I was melted in excess of 1500 °C until the raw materials were molten. The molten material was stirred to produce a homogenous melt, and poured into a cold mold to prevent phase separation. The glass was annealed prior to a phase separation heat treatment at 700 °C for a soak duration of 24 hours. The phase separated glass was pulverized to particles of size 125-175 microns. The glass powder was leached in 10% hydrochloric acid at 80 °C to create a porous glass. The porous glass powder was exposed to a pore cleaning caustic leach to remove any colloidal silica left in the pores after the acid leach. The porous glass powder was dried overnight at 90 °C.

In order to confirm that the processed material was porous, the porous glass powder was analyzed using mercury intrusion porosimetry. This analysis confirmed that the material was porous and a mean pore diameter of 43 nm was measured.

For porous glass powder 2, the weight loss resulting from the alkaline resistance test discussed above was 23%.

### Example 2

Porous glass powder of composition 2 was prepared in the same manner as in prior art Example 1. The porous glass powder produced was immersed in a 0.5% cerium oxide stabilized zirconia sol for one hour. After the immersion time was complete, the powder was separated from the excess sol and dried in air overnight at 90 °C. The dried porous glass powder was placed in a 700 °C furnace, and fired for ninety minutes. The porous glass powder was removed from the furnace and allowed to cool to room temperature. The coated porous glass powder was again immersed in the cerium oxide stabilized zirconia sol for 1.5 hours and agitated. The excess sol was removed and the powder was dried. The dried powder was fired at 700 °C for sixty minutes. The coated powder was then subjected to the identical alkaline resistance test as used in prior art example 1, where the resultant alkaline resistance weight loss was 5.3%,

### Comparative Example 1

A phase separable sodium borosilicate glass of a composition known in the art to have poor durability in alkaline solutions was prepared. From the raw glass a porous glass powder was produced in accordance with the process described in prior art Example 1. Mercury intrusion porosimetry was used to confirm that the material was porous. The mean pore diameter was measured at 253 nm, and the same alkaline resistance test as used in example 1 led to a weight loss was 78%.

### Comparative Example 2

A phase separable sodium borosilicate glass of a composition known in the art to have poor durability in alkaline solutions was prepared. A porous glass powder was produced from the raw glass in accordance with the process described in prior art Example 1. The porous glass powder produced was immersed in a 0.5% cerium oxide stabilized zirconia sol for one hour. After the immersion time was complete, the powder was separated from the excess sol and dried in air overnight at 90 °C. The dried porous glass powder was placed in a 700 °C furnace, and fired for ninety minutes. The porous glass powder was removed from the furnace and allowed to cool to room temperature. The coated porous glass powder was again immersed in the cerium oxide stabilized zirconia sol for one hour and agitated. The excess sol was removed and the powder was dried. The dried powder was fired at 700 °C for sixty minutes. The coated powder was then subjected to the same alkaline resistance test as used in prior art example 1, where the resultant alkaline resistance weight loss was 34.7%.

### Comparative Example 3

A phase separable sodium borosilicate glass, known in the art to have poor durability in alkaline solutions, was prepared. From the raw glass a porous glass powder was produced in accordance with the process described in prior Example 1. The porous glass powder produced was immersed in a 6.0% cerium oxide stabilized zirconia sol for one hour to attempt to increase the alkaline resistance nearer to that of Example 2. After the immersion time was complete, the powder was separated from the excess sol and dried in air overnight at 90 °C. The dried porous glass powder was placed in a 700 °C furnace, and fired for sixty minutes. The porous glass powder was removed from the furnace and allowed to cool to room temperature. The coated porous glass powder was again immersed in the cerium oxide stabilized zirconia sol for one hour and agitated. The excess sol was removed and the powder was dried. The dried powder was fired at 700 °C for sixty minutes. The coated powder was then subjected to the same alkaline resistance test as used in prior art example 1, where the resultant alkaline resistance weight loss was improved to 8.29%.

Comparative Example 3 (8.29% loss) achieved a substantially improved alkaline resistance relative to that of the uncoated sodium borosilicate of Comparative Example 1 (78% loss); however, the sol concentration employed herein is twelve times greater than that used in Comparative Example 2 (34.7% loss) and Example 2 (5.3% loss). Thus, the preferred embodiment of the combination solution of alkaline resistant glass with alkaline resistant sol gel based coating shows substantial improvement in alkaline resistance (Example 2, 5.3% loss).

The examples demonstrate that when both additives are added to the composition to enhance the alkaline resistance of the glass and a coating is applied for the same purpose, the alkaline resistance of the glass is unexpectedly and significantly improves to levels hitherto not known by those of skill in the art.

## Claims

1. A porous, alkaline resistant, sodium borosilicate glass comprising on an oxide basis SiO₂, B₂O₃ and Na₂O forming a glass composition,
ZrO₂, TiO₂, Al₂O₃, CaO and/or ZnO as an additive to the glass composition, and a ZrO₂ based sol gel coating on the glass,
which glass has undergone phase separation to form a boron-rich soluble phase and a silica-rich insoluble phase, and the boron-rich soluble phase has been substantially removed prior to the application of the sol gel coating,
wherein the ZrO₂ based sol gel coating is applied by immersion of the glass into a 0.5 to 6.0 % cerium oxide stabilized zirconia sol.

2. A glass according to claim 1, wherein the starting composition by weight comprises 40-80 % SiO₂, 5-35 % B₂O₃ and 1-10 % Na₂O, and
0 to 12% of ZrO₂, 0 to 10 % of HO₂, 0 to 10 % Al₂O₃, 0 to 10 % CaO, and/or 0 to 10% ZnO as an additive in the glass,
wherein the glass contains at least one of said additives.

3. A glass according to claim 1, which is in the form of a powder.

4. A glass according to claim 1, which is in the form of a monolithic piece.

5. A process of preparing a glass according to claim 1, comprising the steps of:
A. Forming a glass composition containing SiO₂, B₂O₃ and Na₂O, and ZrO₂, TiO₂, Al₂O₃, CaO and/or ZnO as an additive to the glass composition.
B. Undergoing a phase separation to form a boron-rich soluble phase and a silica-rich insoluble phase.
C. Substantial removement of the boron-rich soluble phase.
D. Applying a ZrO₂ based sol gel coating to the glass composition, wherein the ZrO₂ based sol gel coating is applied by immersion of the glass into a 0.5 to 6.0 % cerium oxide stabilized zirconia sol.

6. A process of claim 5, wherein the starting composition of the glass by weight comprises
40-80 % SiO₂, 5-35 % B₂O₃ and 1-10 % Na₂O, and
0 to 12% of ZrO₂, 0 to 10 % of TiO₂, 0 to 10 % Al₂O₃, 0 to 10 % CaO, and/or 0 to 10% ZnO as an additive in the glass,
wherein the glass contains at least one of said additives.

7. A process of claim 5, wherein two coatings of the ZrO₂ based sol gel coating are applied.

8. A process of claim 5, wherein the glass particles are pulverized to a size between 0.1-500 microns prior to coating.

9. A process of claim 5, wherein the ZrO₂ based sol gel coating is applied by immersion of the glass into a 0.5 % cerium oxide stabilized zirconia sol.

10. A process according to claim 5, comprising
A. melting SiO₂, B₂O₃ and Na₂O, and ZrO₂, TiO₂, Al₂O₃, CaO and/or ZnO to a molten state,
B. cooling and annealing in a manner that minimizes or prevents phase separation,
C. phase separating the glass into a boron-rich soluble phase and a silica-rich insoluble phase,
D. pulverizing the glass into particles of 100-200 microns in size,
E. creating pores in the glass particles by leaching the boron-rich phase from the glass in hydrochloric acid with minimal or no leaching of the silica-rich phase,
F. cleaning the glass partials in a sodium hydroxide bath with minimal or no leaching of the silica-rich phase,
G. immersing glass particles in cerium oxide stabilized zirconia sol,
H. agitating the glass particles in the sol,
I. removing the glass particles from the sol,
J. drying the glass particles, and
K. firing the glass particles a temperature of 600 to 700 °C.

## Patentansprüche

1. Poröses, alkalibeständiges Natriumborosilicat-Glas, umfassend auf einer Oxid-Basis SiO₂, B₂O₃ und Na₂O, welche eine Glaszusammensetzung bilden,
ZrO₂, TiO₂, Al₂O₃, CaO und/oder ZnO als ein Additiv für die Glaszusammensetzung, und
eine Sol-Gel-Beschichtung auf ZrO₂-Basis auf dem Glas,
wobei in dem Glas eine Phasentrennung stattgefunden hat, um eine Bor-reiche lösliche Phase und eine Siliciumdioxid-reiche unlösliche Phase zu bilden, und wobei die Bor-reiche lösliche Phase vor der Aufbringung der Sol-Gel-Beschichtung im Wesentlichen entfernt wurde,
wobei die Sol-Gel-Beschichtung auf ZrO₂-Basis durch Tauchen des Glases in ein 0,5 bis 6,0 % Ceroxid-stabilisiertes Zirconiumdioxid-Sol aufgebracht wird.

2. Glas gemäß Anspruch 1, wobei die Ausgangszusammensetzung, bezogen auf das Gewicht, umfasst
40-80 % SiO₂, 5-35 % B₂O₃ und 1-10 % Na₂O, und 0 bis 12 % ZrO₂, 0 bis 10 % TiO₂, 0 bis 10 % Al₂O₃, 0 bis 10 % CaO und/oder 0 bis
10 % ZnO als ein Additiv in dem Glas,
wobei das Glas mindestens eines von den Additiven enthält.

3. Glas gemäß Anspruch 1, welches in der Form eines Pulvers vorliegt.

4. Glas gemäß Anspruch 1, welches in der Form eines monolithischen Stückes vorliegt.

5. Verfahren zur Herstellung eines Glases gemäß Anspruch 1, umfassend die Schritte von:
A. Bilden einer Glaszusammensetzung, umfassend SiO₂, B₂O₃ und Na₂O, und ZrO₂, TiO₂, Al₂O₃, CaO und/oder ZnO als ein Additiv für die Glaszusammensetzung,
B. Stattfindenlassen einer Phasentrennung, um eine Bor-reiche lösliche Phase und eine Siliciumdioxid-reiche unlösliche Phase zu bilden,
C. im Wesentlichen Entfernen der Bor-reichen löslichen Phase,
D. Aufbringen einer Sol-Gel-Beschichtung auf ZrO₂-Basis auf die Glaszusammensetzung, wobei die Sol-Gel-Beschichtung auf ZrO₂-Basis durch Tauchen des Glases in ein 0,5 bis 6,0 % Ceroxid-stabilisiertes Zirconiumdioxid-Sol aufgebracht wird.

6. Verfahren nach Anspruch 5, wobei die Ausgangszusammensetzung des Glases, bezogen auf das Gewicht, umfasst
40-80 % SiO₂, 5-35 % B₂O₃ und 1-10 % Na₂O, und
0 bis 12 % ZrO₂, 0 bis 10 % TiO₂, 0 bis 10 % Al₂O₃, 0 bis 10 % CaO und/oder 0 bis 10 % ZnO als ein Additiv in dem Glas,
wobei das Glas mindestens eines von den Additiven enthält.

7. Verfahren nach Anspruch 5, wobei zwei Beschichtungen der Sol-Gel-Beschichtung auf ZrO₂-Basis aufgebracht werden.

8. Verfahren nach Anspruch 5, wobei die Glasteilchen vor dem Beschichten auf eine Größe zwischen 0,1-500 Mikron pulverisiert werden.

9. Verfahren nach Anspruch 5, wobei die Sol-Gel-Beschichtung auf ZrO₂-Basis durch Tauchen des Glases in ein 0,5 % Ceroxid-stabilisiertes Zirconiumdioxid-Sol aufgebracht wird.

10. Verfahren gemäß Anspruch 5, umfassend
A. Schmelzen von SiO₂, B₂O₃ und Na₂O, und ZrO₂, TiO₂, Al₂O₃, CaO und/oder ZnO zu einem geschmolzenen Zustand,
B. Kühlen und Tempern in einer Weise, welche Phasentrennung minimiert oder verhindert,
C. Phasentrennen des Glases in eine Bor-reiche lösliche Phase und eine Siliciumdioxid-reiche unlösliche Phase,
D. Pulverisieren des Glases zu Teilchen mit einer Größe von 100-200 Mikron,
E. Erzeugen von Poren in den Glasteilchen durch Auswaschen der Bor-reichen Phase aus dem Glas in Chlorwasserstoffsäure mit minimalem oder keinem Auswaschen der Siliciumdioxid-reichen Phase,
F. Reinigen der Glasteilchen in einem Natriumhydroxid-Bad mit minimalem oder keinem Auswaschen der Siliciumdioxid-reichen Phase,
G. Tauchen von Glasteilchen in Ceroxid-stabilisiertes Zirconiumdioxid-Sol,
H. Bewegen der Glasteilchen in dem Sol,
I. Entfernen der Glasteilchen von dem Sol,
J. Trocknen der Glasteilchen, und
K. Brennen der Glasteilchen bei einer Temperatur von 600 bis 700°C.

## Revendications

1. Verre de borosilicate de sodium poreux résistant aux substances alcalines comprenant sur une base d'oxydes
SiO₂, B₂O₃ et Na₂O formant une composition de verre,
ZrO₂, TiO₂, Al₂O₃, CaO et/ou ZnO comme additif à la composition de verre, et un revêtement sol-gel à base de ZrO₂ sur le verre,
lequel verre a subi une séparation de phase pour former une phase soluble riche en bore et une phase insoluble riche en silice, et la phase soluble riche en bore a été sensiblement éliminée avant l'application du revêtement sol-gel,
dans lequel le revêtement sol-gel à base de ZrO₂ est appliqué par immersion du verre dans une solution de zircone stabilisée par de l'oxyde de cérium de 0,5 à 6,0 %.

2. Verre selon la revendication 1, dans lequel la composition de départ en poids comprend
40 à 80 % de SiO₂, 5 à 35 % de B₂O₃ et 1 à 10 % de Na₂O et
0 à 12 % de ZrO₂, 0 à 10 % de TiO₂, 0 à 10 % d'Al₂O₃, 0 à 10 % de CaO et/ou 0 à 10 % de ZnO comme additif dans le verre,
dans lequel le verre contient au moins un desdits additifs.

3. Verre selon la revendication 1, qui se présente sous la forme d'une poudre.

4. Verre selon la revendication 1, qui se présente sous la forme d'un bloc monolithique.

5. Procédé de préparation d'un verre selon la revendication 1, comprenant les étapes de :
A. Formation d'une composition de verre contenant SiO₂, B₂O₃ et Na₂O, et ZrO₂, TiO₂, Al₂O₃, CaO et/ou ZnO comme additif à la composition de verre.
B. Réalisation d'une séparation de phase pour former une phase soluble riche en bore et une phase insoluble riche en silice.
C. Élimination substantielle de la phase soluble riche en bore.
D. Application d'un revêtement sol-gel à base de ZrO₂ sur la composition de verre, dans lequel le revêtement sol-gel à base de ZrO₂ est appliqué par immersion du verre dans une solution de zircone stabilisée par de l'oxyde de cérium de 0,5 à 6,0 %.

6. Procédé selon la revendication 5, dans lequel la composition de départ du verre en poids comprend
40 à 80 % de SiO₂, 5 à 35 % de B₂O₃ et 1 à 10 % de Na₂O et
0 à 12 % de ZrO₂, 0 à 10 % de TiO₂, 0 à 10 % d'Al₂O₃, 0 à 10 % de CaO et/ou 0 à 10 % de ZnO comme additif dans le verre,
dans lequel le verre contient au moins un desdits additifs.

7. Procédé selon la revendication 5, dans lequel deux couches du revêtement sol-gel à base de ZrO₂ sont appliquées.

8. Procédé selon la revendication 5, dans lequel les particules de verre sont réduites en poudre jusqu'à atteindre une taille entre 0,1 et 500 microns avant le revêtement.

9. Procédé selon la revendication 5, dans lequel le revêtement sol-gel à base de ZrO₂ est appliqué par immersion du verre dans une solution de zircone stabilisée par de l'oxyde de cérium à 0,5 %.

10. Procédé selon la revendication 5, comprenant
A. la fusion de SiO₂, B₂O₃ et Na₂O, et de ZrO₂, TiO₂, Al₂O₃, CaO et/ou ZnO jusqu'à un état fondu,
B. le refroidissement et le recuit de façon à minimiser ou empêcher la séparation de phase,
C. la séparation de phase du verre en une phase soluble riche en bore et une phase insoluble riche en silice,
D. la réduction du verre en particules d'une taille de 100 à 200 microns,
E. la création de pores dans les particules de verre par lixiviation de la phase riche en bore à partir du verre dans de l'acide chlorhydrique, avec une lixiviation minime, voire nulle, de la phase riche en silice,
F. le nettoyage des fragments de verre dans un bain d'hydroxyde de sodium avec une lixiviation minime, voire nulle, de la phase riche en silice,
G. l'immersion des particules de verre dans une solution de zircone stabilisée à l'oxyde de cérium,
H. l'agitation des particules de verre dans la solution,
I. l'élimination des particules de verre de la solution,
J. le séchage des particules de verre et
K. la cuisson des particules de verre à une température de 600 à 700° C.
